# EUROPÄISCHE PATENTANMELDUNG

(11) **EP 3 281 537 A2**
(43) Veröffentlichungstag der Anmeldung: **14.02.2018**
(21) Anmeldenummer: 17184236.2
(22) Anmeldetag: 01.08.2017
(51) Int. Cl.: A24C 5/47, A24D 3/02

(54) **FÖRDERTROMMEL DER TABAK VERARBEITENDEN INDUSTRIE**

(30) Priorität: 08.08.2016 DE 102016114641
(71) Anmelder: Hauni Maschinenbau GmbH, 21033 Hamburg (DE)
(72) Erfinder: THIESSEN, Niclas, 22885 Barsbüttel (DE); HOFMANN, Nils, 21029 Hamburg (DE)
(74) Vertreter: Seemann & Partner Patentanwälte mbB

(57) **Zusammenfassung**

Die Erfindung betrifft unter anderem eine Fördertrommel (100) der Tabak verarbeitenden Industrie zum Fördern von stabförmigen Artikeln der Tabak verarbeitenden Industrie, insbesondere Filterstäbe und/oder Filterstabsegmente, in queraxialer Richtung mit am äußeren Umfang der Fördertrommel (100) in, vorzugsweise regelmäßigen, Abständen angeordneten Aufnahmemulden (20), wobei mindestens ein, vorzugsweise ortsfester, Anschlag (22, 24) für die in den Aufnahmemulden (20) bewegbaren oder bewegten stabförmigen Artikel seitlich an den Aufnahmemulden (20), insbesondere an den seitlichen Enden der Aufnahmemulden (20), anordbar oder angeordnet ist und/oder mindestens ein, vorzugsweise ortsfester, Anschlag (42, 52) für die in den Aufnahmemulden (20) bewegbaren oder bewegten stabförmigen Artikel zwischen den Enden der Aufnahmemulden (20) anordbar oder angeordnet ist, wobei der Anschlag (22, 24, 42, 52) oder die Anschläge (22, 24, 42, 52) im Bereich der Aufnahmemulden (20) jeweils einen Anschlagbereich (60) für die Enden der stabförmigen Artikel aufweisen, wobei der Anschlagbereich (60) des Anschlags (22, 24, 42, 52) oder der Anschläge (22, 24, 42, 52) eine Reibungseinrichtung mit einer Reibfläche für die Enden der stabförmigen Artikel aufweist, wobei der Anschlag (22, 24, 42, 52) oder die Anschläge (22, 24, 42, 52) für die stabförmigen Artikel jeweils mittels eines Anschlagflachkörpers, insbesondere eines Anschlagblechs, ausgebildet ist und der Anschlagflachkörper oder die Anschlagflachkörper wenigstens eine oder mehrere Durchbrechungen im Anschlagbereich (60) für die Enden der stabförmigen Artikel aufweisen.

## Beschreibung

### Beschreibung

Die Erfindung betrifft eine Fördertrommel der Tabak verarbeitenden Industrie zum Fördern von stabförmigen Artikeln der Tabak verarbeitenden Industrie, insbesondere Filterstäbe und/oder Filterstabsegmente, in queraxialer Richtung mit am äußeren Umfang der Fördertrommel in, vorzugsweise regelmäßigen, Abständen angeordneten Aufnahmemulden für die stabförmigen Artikel.

Ferner betrifft die Erfindung eine Maschine der Tabak verarbeitenden Industrie, insbesondere Filteransetzmaschine oder Filterherstellmaschine, sowie eine Filterstabsegmentbereitstellungseinrichtung zum Bereitstellen von aus Filterstäben hergestellten Filterstabsegmenten.

Außerdem betrifft die Erfindung eine Verwendung wenigstens eines Anschlags für stabförmige Artikel sowie ein Verfahren zum queraxialen Fördern von stabförmigen Artikeln der Tabak verarbeitenden Industrie, insbesondere Filterstäbe und/oder Filterstabsegmente.

In Maschinen der Tabak verarbeitenden Industrie, insbesondere Filteransetzmaschinen, werden Fördertrommeln eingesetzt, um Zigaretten, Filterstücke oder deren Komponenten zu transportieren. Unter dem Begriff "Komponenten" von den Zigaretten und Filterstäben werden im Sinne der Erfindung auch Elemente von alternativen Rauchprodukten verstanden, wie z.B. Heizelemente.

Das Fördern der vorgenannten Gegenstände während der Herstellung von Zigaretten, Filtern sowie Filterzigaretten wird bei modernen Produktionsmaschinen der Tabak verarbeitenden Industrie im Allgemeinen mittels Fördertrommeln durchgeführt, deren Mantelfläche bzw. deren Trommelkörper zum queraxialen Fördern von stabförmigen Gegenständen (Zigaretten, Filterstäben oder Filterstopfen, Filterzigaretten) mit Nuten oder Aufnahmemulden zum Aufnehmen der Gegenstände versehen ist.

Während der Förderung werden diese stabförmigen Artikel der Tabak verarbeitenden Industrie in Aufnahmemulden von Saugluft auf den Fördertrommeln gehalten, die an entsprechenden Saugluftöffnungen der Aufnahmemulden anliegen. Diese Aufnahmemulden sind im Allgemeinen in Reihen queraxial hintereinander angeordnet.

In Filteransetzmaschinen werden auf den Fördertrommeln stabförmige Artikel, wie z.B. Tabakstöcke oder Filterstopfen bzw. Filterstäbe, queraxial in Aufnahmemulden der Fördertrommel gefördert. Hierbei sind die Aufnahmemulden in vorbestimmten Teilungsabständen auf der Umfangsfläche der Fördertrommel angeordnet.

Darüber hinaus sind als Fördertrommeln auch Schiebe/Schneidtrommeln bekannt, die aus einer Kombination einer Transporttrommel, auf der stabförmige Artikel längsaxial verschoben werden, und wenigstens einer Schneideinrichtung bzw. eines Schneidmessers für die transportierten Artikel bestehen. Beispielsweise ist aus EP-A-1 700 528 eine derartige Schiebe-/Schneidtrommel bekannt.

Diese Trommeln werden üblicherweise im Zuge der Konfektionierung von Filterstäben und von Filterzigaretten eingesetzt, wobei Filterstabkomponenten mehrfacher Gebrauchslänge in einem so genannten Querverfahren, d.h. quer zu ihren Längsachsen, durch einmalige oder mehrmalige Unterteilung, Staffelung und Hintereinanderreihung für ihre nachfolgende Verbindung mit weiteren Filterkomponenten oder Rauchartikelkomponenten vorbereitet werden. Hierfür ist eine Vielzahl von Fördertrommeln zur Ausführung der Bearbeitungsschritte notwendig. Im Zuge dieser Bearbeitungs- und Handhabungsschritte ist insbesondere eine für einen Trennschnitt an aufeinander folgenden Filterstabkomponenten erforderliche definierte längsaxiale Positionierung bzw. gegenseitige Ausrichtung der Filterstabkomponenten in ihren Aufnahmemulden für die die Länge des Förderwegs bestimmende Trommelanzahl von Bedeutung.

In EP-A-1 013 181 ist eine weitere Schiebe-/Schneidtrommel offenbart, wobei die Rauchartikelkomponenten bzw. Filterstücke in den Aufnahmemulden durch Anlegen von Saugluft an Saugbohrungen der Aufnahmen gegen längsverschiebbare Anschläge auf pneumatische Weise verschoben werden.

Außerdem ist in EP-A-2 668 857 eine Fördertrommel zum Fördern von stabförmigen Artikeln der Tabak verarbeitenden Industrie offenbart, wobei in Umfangsrichtung der Fördertrommel eine Abdeckung für mehrere Aufnahmemulden vorgesehen ist und im von der Abdeckung abgedeckten Förderbereich der Fördertrommel ein Anschlag für die stabförmigen Artikel anordbar oder angeordnet ist.

Ausgehend von diesem Stand der Technik besteht die Aufgabe der Erfindung darin, eine Fördertrommel der Tabak verarbeitenden Industrie, insbesondere eine Schiebe-/Schneidtrommel zu verbessern.

Gelöst wird diese Aufgabe durch eine Fördertrommel der Tabak verarbeitenden Industrie zum Fördern von stabförmigen Artikeln der Tabak verarbeitenden Industrie, insbesondere Filterstäbe und/oder Filterstabsegmente, in queraxialer Richtung mit am äußeren Umfang der Fördertrommel in, vorzugsweise regelmäßigen, Abständen angeordneten Aufnahmemulden, wobei mindestens ein, vorzugsweise ortsfester, Anschlag für die in den Aufnahmemulden, vorzugsweise längsaxialen, bewegbaren oder bewegten stabförmigen Artikel seitlich an den Aufnahmemulden, insbesondere an den seitlichen Enden der Aufnahmemulden, anordbar oder angeordnet ist und/oder mindestens ein, vorzugsweise ortsfester, Anschlag für die in den Aufnahmemulden bewegbaren oder bewegten stabförmigen Artikel zwischen den Enden der Aufnahmemulden anordbar oder angeordnet ist, wobei der Anschlag oder die Anschläge im Bereich der Aufnahmemulden jeweils einen Anschlagbereich für die Enden der stabförmigen Artikel aufweisen, wobei der Anschlagbereich des Anschlags oder der Anschläge eine Reibungseinrichtung mit einer Reibfläche für die Enden der stabförmigen Artikel aufweist, wobei der Anschlag oder die Anschläge für die stabförmigen Artikel jeweils mittels eines Anschlagflachkörpers, insbesondere eines Anschlagblechs, ausgebildet ist und der Anschlagflachkörper oder die Anschlagflachkörper wenigstens eine oder mehrere Durchbrechungen im Anschlagbereich für die Enden der stabförmigen Artikel aufweisen.

Die Erfindung beruht auf dem Gedanken, dass der oder die Anschläge für die stabförmigen Artikel einen Anschlagbereich für die Enden aufweist, der mit einer Reibungseinrichtung für die Enden der stabförmigen Artikel versehen ist, so dass beispielsweise bei der Förderung von Filterstäben oder Filterstabsegmenten mit Feststoffpartikeln, wie z.B. Charcoal-Zusatzstoffen, die an den Enden der stabförmigen Artikel befindlichen Zusatzstoffe in Kontakt mit der Reibfläche der Reibungseinrichtung gebracht werden oder sind, so dass durch das Entlangreiben der Filterstabsegmente oder Filterstäbe entlang der Reibfläche der Reibeinrichtung die losen Partikel aus dem Kopfendbereich der stabförmigen Artikel entfernt werden bzw. herausfallen und anschließend von der Fördertrommel entfernt werden. Durch die Rotation der Fördertrommel werden die stabförmigen Artikel, wie zum Beispiel Filterstäbe oder Filterstabsegmente, entlang der ortsfesten Reibungseinrichtung mit ihren Enden entlanggeführt, so dass die Enden die Reibfläche berühren, wodurch lose Partikel aus dem Kopfendbereich der stabförmigen Artikel aufgrund der Reibung zwischen dem Ende und der Reibfläche herausgelöst werden.

Dabei können bei der Fördertrommel längsaxiale Verschiebevorgänge der stabförmigen Artikel, insbesondere Filterstäbe oder Filterstabsegmente, in den Aufnahmemulden ausgeführt werden, so dass die stabförmigen Artikel durch eine längsaxiale Verschiebung in den Aufnahmemulden seitlich zu den Anschlägen der Aufnahmemulden mit der Reibeinrichtung gefördert werden, während die in den Aufnahmemulden angeordneten stabförmigen Artikel auf der Fördertrommel queraxial unter Rotation der Fördertrommel gefördert werden.

Im Rahmen der Erfindung kann hierbei vorgesehen sein, dass die Anschläge als ortsfeste, d.h. nicht bewegbare oder nicht bewegte Anschläge ausgebildet sind.

Insbesondere ist bei einer Ausbildung der Fördertrommel als Schiebetrommel oder als Schiebe-/Schneidtrommel vorgesehen, dass seitlich an oder in den Aufnahmemulden ortsfeste oder starre und die Aufnahmemulden begrenzende Anschläge vorgesehen sind.

Darüber hinaus ist es in einer Ausgestaltung möglich, dass zwischen den Enden der Aufnahmemulden bzw. zwischen zwei seitlichen Anschlägen der Aufnahmemulden ein in seiner Position veränderbarer Anschlag an der Fördertrommel vorgesehen ist, so dass unter Verwendung von entsprechenden Verschiebemitteln für die stabförmigen Artikel wenigstens ein Teil der stabförmigen Artikel gegen diesen Anschlag gefördert wird und an diesem Anschlag mit der Reibeinrichtung für die Enden positioniert wird.

Gemäß einem Aspekt der Erfindung ist vorgesehen, dass der Anschlag oder die Anschläge für die stabförmigen Artikel jeweils mittels eines Anschlagflachkörpers, insbesondere eines Anschlagblechs, ausgebildet ist, wobei insbesondere der Anschlagflachkörper eine, vorzugsweise gekrümmte, Länge aufweist, die größer als mehr als ein, vorzugsweise mehr als zwei, Muldendurchmesser der Aufnahmemulden ist. Hierbei sind vorzugsweise der wenigstens eine Anschlag oder die Anschläge ortsfest angeordnet, wobei der Anschlagflachkörper, insbesondere das Anschlagblech, für mehrere Aufnahmemulden vorgesehen ist. Aufgrund der Krümmung der Fördertrommel sind der Anschlagflachkörper oder die Anschlagflachkörper ebenfalls gekrümmt ausgebildet, wobei die Länge des jeweiligen Anschlagbereichs der Anschlagflachkörper größer ist als der Muldendurchmesser wenigstens einer Aufnahmemulde, insbesondere der doppelte Muldendurchmesser der Aufnahmemulden.

Gemäß der Erfindung weisen der Anschlagflachkörper oder die Anschlagflachkörper wenigstens eine oder mehrere Durchbrechungen im Anschlagbereich für die Enden der stabförmigen Artikel auf.

Der Anschlagflachkörper, insbesondere das Anschlagblech, oder die Anschlagflachkörper sind im Anschlagbereich für die Enden der stabförmigen Artikel hierbei mit Aussparungen oder Durchbrechungen versehen, wodurch eine Reibeinrichtung für die stabförmigen Artikel ausgebildet ist. Beispielsweise ist es denkbar, dass die Durchbrechungen im Anschlagbereich rechteckförmig, trapezförmig, dreieckig oder polygonal-förmig oder rund etc. ausgebildet sind.

Insbesondere ist der Abstand zwischen zwei Durchbrechungen im Anschlagbereich des Anschlagflachkörpers oder der Anschlagflachkörper kleiner als der Abstand der Aufnahmemulden oder der Abstand der Muldendurchmesser der Fördertrommel, so dass beispielsweise bei Rotation der Fördertrommel entlang des Anschlagflachkörpers oder Anschlagflachkörper mehrere Durchbrechungen im Anschlagbereich jeweils einer Aufnahmemulde zugeordnet sind.

Vorzugsweise sind die Aufnahmemulden der Fördertrommel wannenartig ausgebildet, wobei insbesondere die, vorzugsweise maximale, Tiefe der Aufnahmemulden für die stabförmigen Artikel gleich oder größer als der Durchmesser der zu fördernden stabförmigen Artikel ist, so dass die zu fördernden stabförmigen Artikel in den Aufnahmemulden, insbesondere vollständig oder nahezu vollständig, aufgenommen sind.

Überdies zeichnet sich eine Weiterbildung der Fördertrommel dadurch aus, dass Muldenstege zwischen den Aufnahmemulden ausgebildet sind, wobei die Muldenstege mit Nuten zwischen den Enden der Aufnahmemulden ausgebildet sind, so dass zumindest der Anschlagbereich des Anschlags oder der Anschläge für die Enden der stabförmigen Artikel mit ihrem jeweiligen Anschlagbereich in den Nuten der Muldenstege anordbar oder angeordnet sind. Dadurch wird erreicht, dass der oder die Anschlagflachkörper zwischen den Enden der Aufnahmemulden mit ihrem Anschlagbereich bis kurz über dem Muldengrund der Aufnahmemulden anordbar sind. Ebenso ist es in einer Ausgestaltung möglich, dass im Muldengrund der Aufnahmemulden jeweils eine Nut ausgebildet ist, so dass in die Nuten der Muldengrunde der Aufnahmemulden der Anschlagflachkörper mit dem die Reibeinrichtung aufweisenden Anschlagbereich teilweise eintauchend angeordnet oder anordbar ist.

Des Weiteren zeichnet sich die Fördertrommel dadurch aus, dass in einem Förderbereich der Fördertrommel in Umfangsrichtung eine Abdeckung für mehrere Aufnahmemulden vorgesehen ist, wobei der wenigstens eine zwischen den Enden der Aufnahmemulden anordbare oder angeordnete Anschlag im von der Abdeckung abgedeckten Förderbereich der Fördertrommel zwischen den Enden der Aufnahmemulden anordbar oder angeordnet ist. Dadurch, dass eine ortsfeste Abdeckung für mehrere Aufnahmemulden an der Fördertrommel vorgesehen ist, ist es möglich, dass während der Förderung der stabförmigen Artikel, wie z.B. Filterstabsegmente, innerhalb des Förderbereichs der Abdeckung die Filterstabsegmente nicht mit Unterdruck zum Halten der Filterstabsegmente in den Aufnahmemulden beaufschlagt sind oder werden.

Durch das Abschalten der Halteluft bzw. des Halteunterdrucks an den entsprechenden Bohrungen in den Aufnahmemulden im Bereich der Abdeckung ist es möglich, die geförderten stabförmigen Artikel durch Beaufschlagung von längsaxial wirkender Saugluft zum Verschieben der stabförmigen Artikel in längsaxialer Richtung gegen die Anschläge zu fördern. Hierbei werden mittels der Verschiebe-Saugluft die stabförmigen Artikel gegen die Anschlagbereiche der Anschläge bewegt bzw. gesaugt.

Durch eine entsprechende Schaltung der Verschiebe-Saugluft und unter Verwendung von seitlichen Anschlägen an den Aufnahmemulden oder den Anschlägen zwischen den seitlichen Anschlägen werden zum Beispiel zwei zunächst oder anfangs nebeneinander positionierte Filterstabsegmente in den Aufnahmemulden im Bereich der Abdeckung längsaxial voneinander beabstandet, so dass nach der Beabstandung und Durchführung von längsaxialen Verschiebeprozessen der stabförmigen Artikel innerhalb der oder in den Aufnahmemulden die bei der Übergabe voneinander in den Aufnahmemulden beabstandeten stabförmigen Artikel für eine weitere Fördertrommel und die Weiterverarbeitung bereitgestellt werden.

Aufgrund beispielsweise einer wannenartigen Ausbildung der Aufnahmemulden mit den jeweiligen Anschlägen wird erreicht, dass bei Förderung der stabförmigen Artikel im Förderbereich der Abdeckung im Zusammenwirken der vertieften Aufnahmemulden und der Abdeckung die Aufnahmemulden nahezu vollständig abgedeckt sind, wodurch die in den Aufnahmemulden angeordneten stabförmigen Artikel gekapselt oder kapselartig in den Aufnahmemulden aufgenommen sind und durch die Berandungen der Aufnahmemulden im Zusammenwirken mit der Abdeckung ein Verschieberaum für die stabförmigen Artikel ausgebildet ist.

Insbesondere ist bei der Fördertrommel vorgesehen, dass im von der Abdeckung abgedeckten Förderbereich der Fördertrommel durch die Ausbildung von Unterdruck in den durch die oberseitige oder außenseitige ortsfeste Abdeckung begrenzten Aufnahmemulden die in den Aufnahmemulden aufgenommenen stabförmigen Artikel seitlich in Richtung der Anschläge pneumatisch verschiebbar oder verschoben sind. Hierdurch wird eine Fördertrommel, die auch als Schneid-/Schiebetrommel ausgebildet ist, mit tiefen Mulden bereitgestellt, wobei in den tiefen Mulden beispielsweise nach dem Schnitt von Filterstäben in Filterstabsegmente die Filterstabsegmente unabhängig voneinander durch die Ausbildung von längsaxial gerichteten Verschiebe-Luftströmungen oder Verschiebe-Unterdruck zu den Anschlägen während der Förderung im von der Abdeckung abgedeckten Förderbereich längsaxial verschoben werden.

Dazu ist beispielsweise vorgesehen, dass bei Ausbildung eines Unterdrucks zum längsaxialen Verschieben der stabförmigen Artikel in den Aufnahmemulden in einer oder in den von der Abdeckung abgedeckten Aufnahmemulden die Abdeckung eine Öffnung aufweist, wobei die Öffnung der Abdeckung in einem Bereich der Abdeckung ausgebildet ist, der von dem Verschiebebereich der Aufnahmemulden, in dem die stabförmigen Artikel pneumatisch verschiebbar oder verschoben sind, abgewandt ist. Hierdurch werden die Verschiebevorgänge der stabförmigen Artikel im Förderbereich der Abdeckung erleichtert, da auf der einen Seite der stabförmigen Artikel aufgrund der vorgesehenen Öffnungen Atmosphärendruck vorhanden ist und auf der von der Öffnung abgewandten Seite die stabförmigen Artikel mit Unterdruck beaufschlagt werden, so dass die stabförmigen Artikel in den Aufnahmemulden pneumatisch längsaxial verschoben werden.

Insbesondere ist der wenigstens eine Anschlag zwischen den Enden der Aufnahmemulden an der Abdeckung gehaltert angeordnet, wobei insbesondere der ortsfeste Anschlag zwischen den Enden der Aufnahmemulden von außen nach innen in die Aufnahmemulden mit seinem Anschlagbereich hineinragt bzw. eingreift. Hierzu sind die Aufnahmemulden im Bereich des Anschlags bzw. des Anschlagkörpers mit entsprechenden Nuten in Umfangsrichtung ausgebildet.

Vorzugsweise ist der Anschlagbereich des Anschlags oder sind die Anschlagbereiche der Anschläge für die Enden der stabförmigen Artikel seitlich an den Aufnahmemulden anordbar oder angeordnet. Dadurch, dass in einer Ausbildung seitlich an den Aufnahmemulden ortsfeste oder starre und die Aufnahmemulden begrenzende Anschläge mit einer Reibeinrichtung vorgesehen sind, und wenigstens ein weiterer Anschlag zwischen den beiden seitlichen Anschlägen vorgesehen ist, können unter Verwendung von entsprechenden Verschiebemitteln die aufgenommenen und geförderten stabförmigen Artikel in den Aufnahmemulden längsaxial gegen die Anschläge bewegt werden, so dass die Enden der stabförmigen Artikel die Reibflächen der Reibeinrichtungen der Anschläge berühren.

Außerdem ist vorteilhafterweise bei der Fördertrommel vorgesehen, dass die Reibfläche des Anschlagbereichs des Anschlags oder der Anschläge mit einer diskontinuierlichen und/oder unebenen und/oder rauen Oberflächenstruktur ausgebildet ist.

Des Weiteren ist es vorteilhaft, dass im Bereich des Anschlags oder im Bereich der Anschläge, der oder die von dem Anschlagbereich für die Enden abgewandt sind, wenigstens eine oder mehrere mit Unterdruck beaufschlagbare Saugeinrichtungen, insbesondere Saugluftlöcher oder Saugbohrungen, vorgesehen sind, so dass die stabförmigen Artikel in längsaxialer Richtung in den Aufnahmemulden längsaxial bewegt werden und in Kontakt mit den Reibflächen der Anschläge gebracht werden.

Darüber hinaus ist durch die Saugeinrichtung vorgesehen, dass die aus den stabförmigen Artikeln herausgelösten Partikel oder Feststoffe mittels der Saugeinrichtungen abgesaugt werden.

Insbesondere ist die Fördertrommel als Schiebetrommel oder als Schiebe-/Schneidtrommel ausgebildet. Bei der Ausbildung als Schiebe-/ Schneidtrommel ist an der Fördertrommel eine Schneideinrichtung zum Schneiden der stabförmigen Artikel vorgesehen, wodurch es möglich ist, Filterstäbe in Filterstabsegmente auf der Fördertrommel zu schneiden, wobei anschließend die geschnittenen Filterstabsegmente in den Aufnahmemulden der Fördertrommel durch die Ausbildung von Verschiebe-Luftströmen oder dergleichen in den Aufnahmemulden auf pneumatische Weise längsaxial verschoben werden.

Vorteilhafterweise ist die Schneideinrichtung, insbesondere Schneidmesser, bezogen auf die Förderrichtung der Fördertrommel stromabwärts eines zwischen zwei seitlichen Anschlägen der Aufnahmemulden, vorzugsweise an der Abdeckung, angeordneten Anschlags vorgesehen.

Darüber hinaus wird die Aufgabe gelöst durch eine Maschine der Tabak verarbeitenden Industrie, insbesondere Filteransetzmaschine oder Filterherstellmaschine, die mit einer voranstehend beschriebenen erfindungsgemäßen Fördertrommel ausgebildet ist. Zur Vermeidung von Wiederholungen wird auf die obigen Ausführungen ausdrücklich verwiesen.

Außerdem wird die Aufgabe gelöst durch eine Filterstabsegmentbereitstellungseinrichtung zum Bereitstellen von aus Filterstäben hergestellten Filterstabsegmenten, wobei die Filterstäbe und/oder die Filterstabsegmente an der Filterstabsegmentbereitstellungseinrichtung queraxial gefördert werden oder förderbar sind, wobei die Filterstabsegmentbereitstellungseinrichtung mit einer voranstehend beschriebenen Fördertrommel ausgebildet ist. Hierzu wird ebenfalls auf die obigen Ausführungen ausdrücklich verwiesen.

Außerdem wird die Aufgabe gelöst durch eine Verwendung wenigstens eines Anschlags für stabförmige Artikel für eine oder an einer voranstehend beschriebenen Fördertrommel der Tabak verarbeitenden Industrie.

Ferner wird die Aufgabe gelöst durch ein Verfahren zum queraxialen Fördern von stabförmigen Artikeln der Tabak verarbeitenden Industrie, insbesondere Filterstäbe und/oder Filterstabsegmente, unter Verwendung einer voranstehend beschriebenen erfindungsgemäßen Fördertrommel, wobei beim queraxialen Fördern der stabförmigen Artikel in den Aufnahmemulden ein Ende der stabförmigen Artikel mit dem Anschlagbereich des Anschlags oder der Anschläge in Kontakt gebracht wird und durch den Kontakt des Endes der stabförmigen Artikel mit der Reibeinrichtung oder mit der Reibfläche lose Partikel an den Enden der stabförmigen Artikel aus den stabförmigen Artikeln entfernt werden bzw. herausgelöst werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch ein abgewickeltes Ablaufdiagramm der Filterstabbearbeitung auf einer Schneid-/Schiebetrommel der Tabak verarbeitenden Industrie,
- Fig. 2a: eine perspektivische Ansicht einer erfindungsgemäßen Fördertrommel zum Fördern von stabförmigen Artikeln der Tabak verarbeitenden Industrie,
- Fig. 2b, 2c: weitere perspektivische Ansichten der Fördertrommel im Ausschnitt,
- Fig. 2d: eine Frontansicht auf die Fördertrommel im Ausschnitt,
- Fig. 2e: schematisch einen Querschnitt durch die Fördertrommel gemäß der in Fig. 2d dargestellten Schnittlinie E-E,
- Fig. 2f: schematisch eine Ansicht eines erfindungsgemäßen Anschlags für eine Fördertrommel und
- Fig. 2g: schematisch eine Detailansicht eines in Fig. 2f gekennzeichneten Bereichs des Anschlags an der Fördertrommel.

In den Zeichnungen sind jeweils gleiche oder gleichartige Elemente und/oder Teile mit denselben Bezugsziffern versehen, so dass von einer erneuten Vorstellung jeweils abgesehen wird.

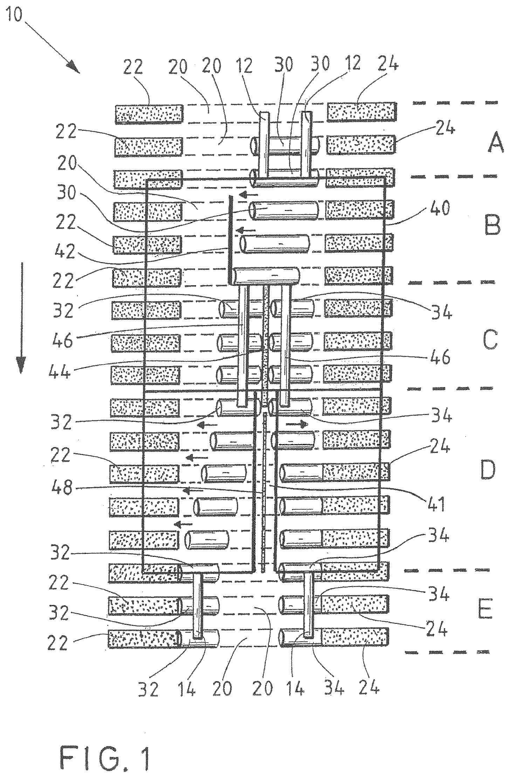

In Fig. 1 ist schematisch ein Ablaufdiagramm für die Bearbeitung von stabförmigen Artikeln, wie z.B. Filterstäben, und aus den Filterstäben geschnittenen Filterstabsegmenten auf einer Schneid-/Schiebetrommel 10 dargestellt. Die Schneid-/Schiebetrommel 10 ist vorzugsweise Bestandteil einer Maschine der Tabak verarbeitenden Industrie zur Herstellung von Zigaretten oder von Multisegmentfiltern, wobei insbesondere die Schneid-/ Schiebetrommel 10 an einer Bereitstellungseinrichtung oder -einheit für ein Filterstabsegment angeordnet ist. Die Schneid-/Schiebetrommel 10 verfügt über am Umfang eines Trommelkörpers ausgebildete Aufnahmemulden 20, an denen an beiden Enden jeweils in Bezug auf die jeweilige Aufnahmemulde 20 starre Anschläge 22, 24 endseitig angeordnet sind.

Im Verfahrensschritt A werden von einer (hier nicht dargestellten) Fördertrommel Filterstäbe 30 in den Aufnahmemulden 20 der Schiebe-/Schneidtrommel 10 angeordnet. Hierzu ist im Verfahrensschritt A bei der Filterstabaufnahme oder Filterstabannahme eine Auskämmeinrichtung 12 angeordnet, um die übernommenen Filterstäbe 30 in den Aufnahmemulden 20 zwischen den seitlichen Anschlägen 22, 24 der Aufnahmemulden zu positionieren. Im nachfolgenden Verfahrensschritt B werden die Filterstäbe 30 innerhalb der Aufnahmemulden 20 längsaxial verschoben und positioniert. Hierbei werden die Filterstäbe 30 unter Rotation der Schneid-/ Schiebetrommel 10 in einen Förderbereich hineingefördert, der von einer außenseitig an der Fördertrommel angeordneten Abdeckung 40 bestimmt ist. Die Abdeckung 40 ist im Ausführungsbeispiel in Fig. 1 schematisch dargestellt.

Die Abdeckung 40 ist dabei in einem vorbestimmten Abstand zu der gekrümmten Oberfläche bzw. gekrümmten Umfangsfläche der Schneid-/ Schiebetrommel 10 angeordnet. Insbesondere ist die Abdeckung 40 als eine Abdeckhaube an der Schneid-/Schiebetrommel 10 für die Aufnahmemulden 20 angeordnet, wobei die Abdeckung 40 die in den Förderbereich hineingeförderten Aufnahmemulden 20 der Schiebe-/Schneidtrommel 10 vollständig überdeckt. Beispielsweise ist die Abdeckung 40 aus Kunststoff, wie z.B. Polyethylen (PE), oder einem anderen biegbaren oder formbaren Material hergestellt.

Während der Förderung der Filterstäbe 30 innerhalb des von der Abdeckung 40 begrenzten Förderbereiches werden die Filterstäbe 30 im Verfahrensschritt B längsaxial auf pneumatische Weise gegen einen an der Abdeckung 40 angeordneten und in die Aufnahmemulden hineingreifenden mit einer Reibeinrichtung für die Enden der Filterstäbe versehenen Anschlag 42 längsaxial verschoben, bis die Filterstäbe 30 am Ende des Verfahrensschritts B seitlich an dem Anschlag 42 anliegen. Durch den Anschlag 42 sind die zu schneidenden Filterstäbe 30 in Bezug auf ein an der Abdeckung 40 bzw. an der Schneid-/Schiebetrommel 10 angeordnetes Schneidmesser 44 mittig ausgerichtet.

Das Schneiden der mittels des Anschlags 42 ausgerichteten Filterstäbe 30 erfolgt im Verfahrensschritt C mittels des Schneidmessers 44, so dass aus den Filterstäben 30 zwei Filterstabsegmente 32, 34 geschnitten werden. Beim Schneiden der Filterstäbe 30 sind beidseits des Schneidmessers 44 Klemmeinrichtungen oder Klemmbleche 46 angeordnet, um ein Verschieben der Filterstäbe 30 und der Filterstabsegmente 32, 34 in den Aufnahmemulden 20 zu vermeiden.

Nach dem Schneiden der Filterstäbe 30 im Verfahrensschritt C werden die geschnittenen Filterstabsegmente 32, 34 im nachfolgenden Verfahrensschritt D längsaxial voneinander durch Verschieben der Filterstabsegmente 32, 34 in den Aufnahmemulden 20 gegen die endseitigen Anschläge 22, 24 voneinander beabstandet. Hierbei wird im Förderbereich des Verfahrensschritts D Unterdruck an den seitlichen Anschlägen 22, 24 bereitgestellt. Durch die sich ausbildende oder ausgebildete Luftströmung werden die Filterstäbe 30 und die Filterstabsegmente 32, 34 längsaxial verschoben bzw. bewegt. Hierdurch werden auf pneumatische Weise durch Anlegen von seitlich wirkender Saugluft die Filterstabsegmente 32, 34 in den Aufnahmemulden 20 verschoben.

Während der Förderung der Filterstäbe 30 und der Filterstabsegmente 32, 34 im von der Abdeckung 40 abgedeckten Förderbereich an der Schneid-/ Schiebetrommel 10 liegt kein Haltevakuum zum Halten der stabförmigen Artikel an den entsprechenden Saugbohrungen der Aufnahmemulden 20 beim Verschieben der stabförmigen Artikel an, wodurch die Filterstäbe 30 und die Filterstabsegmente 32, 34 bei Ausbildung von seitlich wirkender Saugluft zum Verschieben der Filterstäbe 30 bzw. der Filterstabsegmente 32, 34 innerhalb der Aufnahmemulden 20 längsaxial bewegt bzw. verschoben werden.

Um beispielsweise die Filterstäbe 30 im Verfahrensschritt B gegen den Anschlag 42 innerhalb der Aufnahmemulden 20 zu verschieben, wird beispielsweise ein Unterdruck zwischen den Anschlägen 22 und dem Anschlag 42 ausgebildet, so dass bei abgeschalteter Halteluft an den Aufnahmemulden und eingeschalteter Verschiebe-Saugluft die Filterstäbe 30 am Anschlag 42 positioniert werden.

Um die Filterstabsegmente 32, 34 im Verfahrensschritt D getrennt voneinander innerhalb der Aufnahmemulden 20 gegen die endseitigen Anschläge 22, 24 zu verschieben, weist die Abdeckung 40 eine schlitzartige Öffnung 41 aus, wobei in der Ausnehmung 41 ein Trennkörper 48 angeordnet ist, wodurch die Verschiebe-Saugluftströme innerhalb der Aufnahmemulden 20 beim Verschieben der Filterstabsegmente 32, 34 sich nicht gegenseitig beeinflussen. Außerdem wird durch den Trennkörper 48, wie z.B. ein Trennblech oder dergleichen, erreicht, dass auf der von der Saugluftseite abgewandten Seite an den Filterstabsegmenten 32, 34 Atmosphärendruck anliegt, so dass hierdurch das längsaxiale Verschieben der Filterstabsegmente 32, 34 erleichtert wird. Anschließend werden im weiteren Verfahrensschritt E und beim Austritt der verschobenen Filterstabsegmente 32, 34 aus dem von der Abdeckung 40 abgedeckten Förderbereich die an den Anschlägen 22, 24 jeweils angeordneten Filterstabsegmente 32, 34 an eine nachfolgende Fördertrommel (hier nicht dargestellt) übergeben. Hierbei sind zur Unterstützung der Abgabe der Filterstabsegmente 32, 34 Auskämmeinrichtungen 14 im Bereich der Filterstabsegmente 32, 34 an der Schneid-/Schiebetrommel 10 angeordnet.

Durch die Positionierung der seitlichen Anschläge 22, 24 an den Aufnahmemulden 20 sowie der Positionierung des Anschlags 42 innerhalb des von der Abdeckung 40 abgedeckten Förderbereichs (vgl. Verfahrensschritte B, C, D) ist es möglich, bei der Übergabe der Filterstabsegmente 32, 34 diese entsprechend mit einem vorbestimmten Abstand zueinander auszurichten sowie verschieden lange Filterstäbe 30 auf einfache Weise auf der Schneid-/Schiebetrommel 10 zu bearbeiten oder zu verarbeiten. Bei Änderung der Filterstablänge der Filterstäbe 30 wird der Anschlag 42 in Bezug auf das ortsfest an der Schneid-/Schiebetrommel 10 angeordnete Schneidmesser 44 ausgerichtet, so dass die zu schneidenden Filterstäbe 30 mittels des veränderbaren Anschlags 42 stets mittig zur Schneidebene des Schneidmessers 44 ausgerichtet werden.

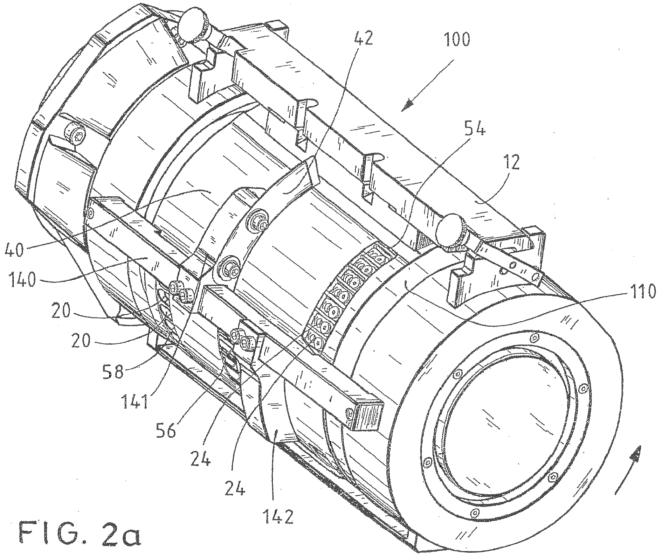

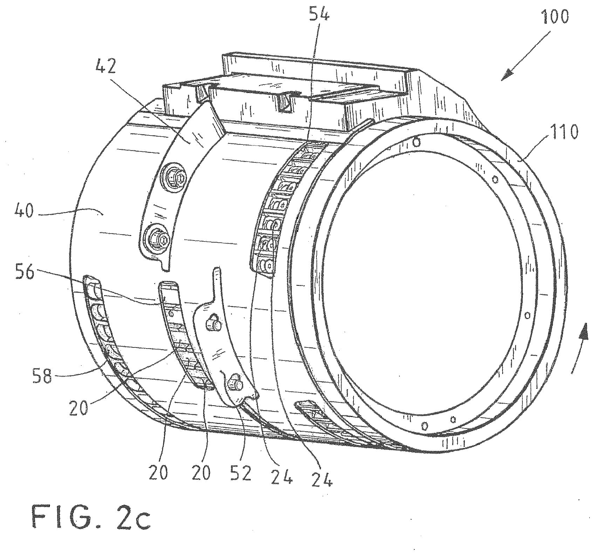

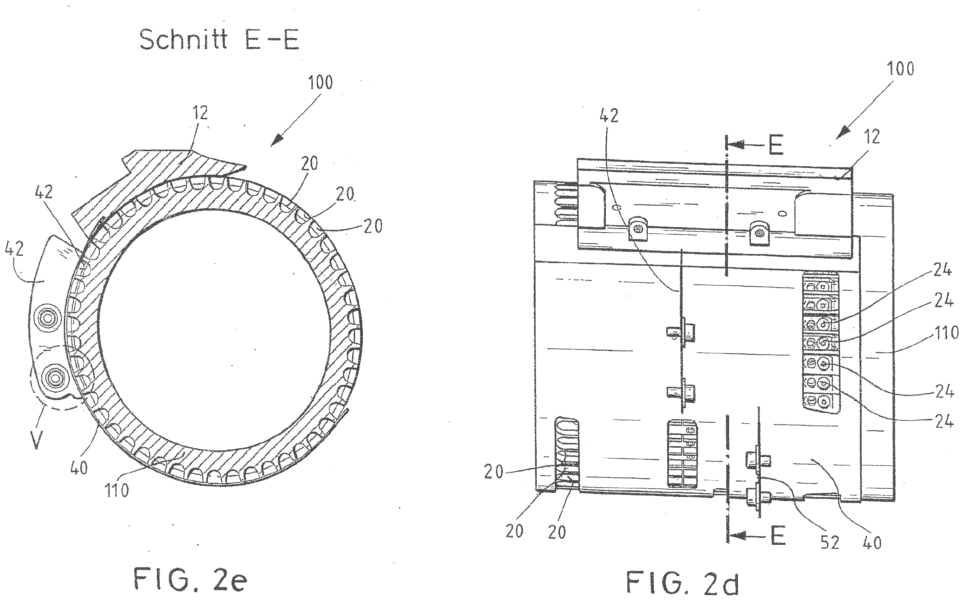

In den Fig. 2a bis 2e sind verschiedene Ansichten einer Fördertrommel 100 zum Fördern von stabförmigen Artikeln, wie z.B. Filterstäben, in queraxialer Richtung schematisch im Ausschnitt dargestellt. Die Fördertrommel 100 weist einen rotierbaren oder rotierend angetriebenen Trommelkörper 110 auf, auf dessen Außenseite wannenartige Aufnahmemulden 20 in regelmäßigen Abständen in Umfangsrichtung hintereinander angeordnet sind.

In einem Förderbereich ist die Abdeckung 40 an der Außenseite der Fördertrommel 100 angeordnet, wobei die Abdeckung 40 über eine Halterung 140 an der Außenseite der Fördertrommel 100 angeordnet ist. Darüber hinaus sind an der Halterung 140 Haltearme 141, 142 vorgesehen bzw. montiert, an denen Anschläge 42, 52 befestigt sind. Die in ihrer Position einstellbaren Anschläge 42, 52 für die stabförmigen Artikel sind dabei zwischen den endseitigen Anschlägen 22, 24 in den Aufnahmemulden 20 angeordnet, so dass bei Förderung von Filterstäben oder Filterstabsegmenten im von der Abdeckung 40 abgedeckten Förderbereich diese längsaxial durch Beaufschlagung von längsaxial, d.h. seitlich wirkender Saugluft zum Verschieben der Filterstäbe bzw. deren Filterstabsegmente in längsaxialer Richtung innerhalb der Aufnahmemulden bewegt werden.

Darüber hinaus sind in der Abdeckung 40 Öffnungen 54, 56, 58 ausgebildet, die in Förderrichtung und in längsaxialer Richtung versetzt zueinander sind. Hierbei sind die in der Abdeckung 40 beispielsweise als Ausfräsungen ausgebildeten Öffnungen 54, 56, 58 vorgesehen, um bei Ausbildung eines Luftstroms in längsaxialer Richtung zum Verschieben der stabförmigen Artikel innerhalb der Aufnahmemulden 20 einen Druckausgleich innerhalb der Aufnahmemulden beim Verschieben der stabförmigen Artikel zu bewirken.

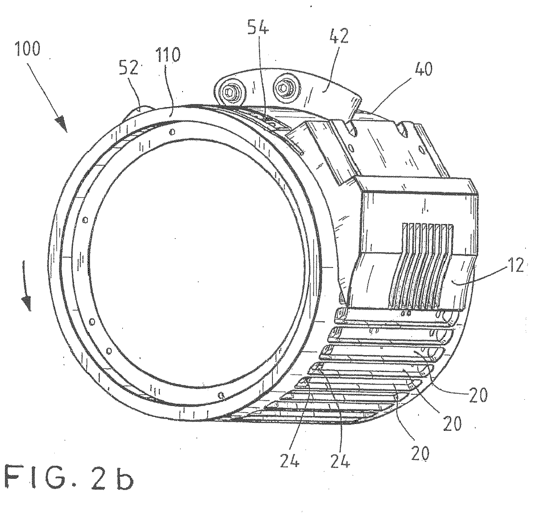

In den Fig. 2b bis 2e wurde von der Einzeichnung der Halteeinrichtungen und weiterer Elemente aus Gründen der Übersichtlichkeit entsprechend abgesehen.

Die in den Fig. 2a bis 2e gezeigte Fördertrommel 100 wird zum queraxialen Fördern von stabförmigen Artikeln verwendet, wobei die Fördertrommel 100 in einer Ausgestaltung mit einem Schneidmesser kombiniert wird, das an der Fördertrommel 100 angeordnet wird, um entsprechend die stabförmigen Artikel in Artikelsegmente zu schneiden. Hierdurch wird bei Kombination der Fördertrommel 100 mit der Schneideinrichtung eine Schneid-/Schiebetrommel bereitgestellt.

Im Rahmen der Erfindung ist es denkbar, dass die Fördertrommel 100 auch ohne Schneideinrichtung in einer Filterstabbereitstellungseinrichtung oder an einer anderen Maschine der Tabak verarbeitenden Industrie zum Fördern und Ausrichten sowie zum Verschieben von stabförmigen Artikeln, wie z.B. Filterstabsegmenten, eingesetzt wird.

In den Fig. 3 bis 6 von EP-A-2 668 857 sind weitere verschiedene Verschiebevorgänge auf einer Fördertrommel schematisch dargestellt. Der Umfang von EP-A-2 668 857 wird vollumfänglich für die vorliegende Anmeldung ausdrücklich mit aufgenommen.

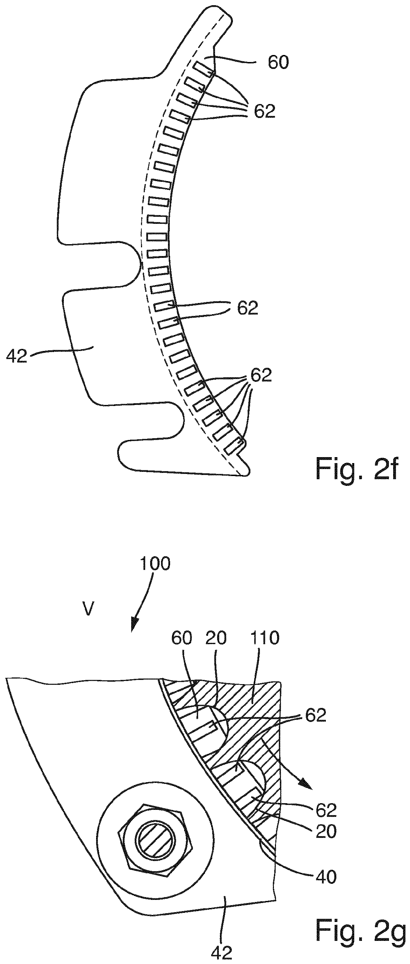

In Fig. 2f ist eine schematische Ansicht eines Anschlags 42 für die Fördertrommel 100 dargestellt. Der Anschlag 42 ist als Flachkörper ausgebildet, wobei der Anschlag 42 einen den Aufnahmemulden der Fördertrommel zugewandten Anschlagbereich 60 aufweist.

Der Anschlagbereich 60 weist in regelmäßigen Abständen rechteckförmige Durchbrechungen 62 auf. Während ihrer Förderung auf der Fördertrommel 100 werden die Filterstopfen in längsaxialer Richtung zu dem Anschlag 42 bewegt, wobei die Enden der Filterstopfen den Anschlagbereich 60 berühren und mit ihm in Kontakt gebracht werden.

Aufgrund der Durchbrechungen 62 entlang des Förderbereichs reiben die Enden der Filterstopfen oder der stabförmigen Artikel entlang des Anschlagbereichs 60, wodurch beispielsweise mit Charcoal versetzte Filterstopfen den Anschlagbereich 60 berühren und aus dem Kopfendbereich hinausragende Charcoalteile aufgrund der diskontinuierlichen Fläche des Anschlagbereichs 60 aufgrund von Reibung aus dem Endbereich herausfallen und mittels einer auf der anderen Seite des Anschlagbereichs 60 vorgesehenen Saugbohrung oder Saugeinrichtung von der Fördertrommel entfernt werden.

Durch die Durchbrechungen 62 ist der Anschlagbereich 60 als Reibfläche ausgebildet. Aufgrund eines angelegten Unterdrucks sind die in den Aufnahmemulden angeordneten Filterstäbe mit ihren Enden zu dem Anschlagbereich 60 mit den Durchbrechungen 62 längsaxial verschoben, wobei durch die Rotationsbewegung der Fördertrommel die Filterstäbe an den Durchbrechungen 62 entlanggeführt werden und die Enden im Anschlagbereich 60 entlang der Durchbrechungen 62 reiben. Durch das Entlangreiben der Filterstäbe werden lose Partikel, wie zum Beispiel Charcoal, aus den Enden bzw. aus den Stirnflächen der Filterstäbe herausgerieben und durch das angelegte Vakuum abgesaugt.

In Fig. 2g ist eine vergrößerte Detailansicht des mit V gekennzeichneten Bereichs aus Fig. 2e schematisch dargestellt. Der Abstand der Durchbrechung 62 ist hierbei kleiner als der Muldendurchmesser der wannenartigen Aufnahmemulden 20 des Trommelkörpers 110. Wie aus Fig. 2g ersichtlich ist, ist der Anschlagbereich 60 bis kurz über dem Muldengrund der Aufnahmemulden 20 angeordnet. Hierbei sind die Durchbrechungen 62 zwischen der Abdeckung 60 und dem Muldengrund der Aufnahmemulden 20 entsprechend angeordnet.

Im Rahmen der Erfindung ist auch vorgesehen, dass auch die die Aufnahmemulden 20 begrenzenden Anschläge 22, 24 (vgl. Fig. 1) mit einer Reibfläche ausgebildet sind. Darüber hinaus können auch in diesem Zusammenhang die Anschläge 22, 24 ebenfalls als ortsfeste Anschläge oder Anschlagflachkörper ausgebildet sein.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Schiebe-/Schneidtrommel
- 12: Auskämmeinrichtung
- 14: Auskämmeinrichtung
- 20: Aufnahmemulde
- 22: Anschlag
- 24: Anschlag
- 30: Filterstab
- 32: Filterstabsegment
- 34: Filterstabsegment
- 40: Abdeckung
- 41: Ausnehmung
- 42: Anschlag
- 44: Schneidmesser
- 46: Klemmblech
- 48: Trennkörper
- 52: Anschlag
- 54: Öffnung
- 56: Öffnung
- 58: Öffnung
- 60: Anschlagbereich
- 62: Durchbrechung
- 100: Fördertrommel
- 110: Trommelkörper
- 140: Halterung
- 141: Haltearm
- 142: Haltearm

## Patentansprüche

1. Fördertrommel (100) der Tabak verarbeitenden Industrie zum Fördern von stabförmigen Artikeln der Tabak verarbeitenden Industrie, insbesondere Filterstäbe und/oder Filterstabsegmente, in queraxialer Richtung mit am äußeren Umfang der Fördertrommel (100) in, vorzugsweise regelmäßigen, Abständen angeordneten Aufnahmemulden (20), wobei mindestens ein, vorzugsweise ortsfester, Anschlag (22, 24) für die in den Aufnahmemulden (20) bewegbaren oder bewegten stabförmigen Artikel seitlich an den Aufnahmemulden (20), insbesondere an den seitlichen Enden der Aufnahmemulden (20), anordbar oder angeordnet ist und/oder mindestens ein, vorzugsweise ortsfester, Anschlag (42, 52) für die in den Aufnahmemulden (20) bewegbaren oder bewegten stabförmigen Artikel zwischen den Enden der Aufnahmemulden (20) anordbar oder angeordnet ist, wobei der Anschlag (22, 24, 42, 52) oder die Anschläge (22, 24, 42, 52) im Bereich der Aufnahmemulden (20) jeweils einen Anschlagbereich (60) für die Enden der stabförmigen Artikel aufweisen, wobei der Anschlagbereich (60) des Anschlags (22, 24, 42, 52) oder der Anschläge (22, 24, 42, 52) eine Reibungseinrichtung mit einer Reibfläche für die Enden der stabförmigen Artikel aufweist, wobei der Anschlag (22, 24, 42, 52) oder die Anschläge (22, 24, 42, 52) für die stabförmigen Artikel jeweils mittels eines Anschlagflachkörpers, insbesondere eines Anschlagblechs, ausgebildet ist und der Anschlagflachkörper oder die Anschlagflachkörper wenigstens eine oder mehrere Durchbrechungen im Anschlagbereich (60) für die Enden der stabförmigen Artikel aufweisen.

2. Fördertrommel (100) nach Anspruch 1, **dadurch gekennzeichnet, dass** der Anschlagflachkörper eine, vorzugsweise gekrümmte, Länge aufweist, die größer als mehr als ein, vorzugsweise mehr als zwei, Muldendurchmesser der Aufnahmemulden (20) ist.

3. Fördertrommel (100) nach Anspruch 1 oder 2, **dadurch gekennzeichnet, dass** der Abstand zwischen zwei Durchbrechungen im Anschlagbereich (60) des Anschlagflachkörpers oder der Anschlagflachkörper kleiner als der Abstand der Aufnahmemulden (20) der Fördertrommel (100) ist.

4. Fördertrommel (100) nach einem der Ansprüche 1 bis 3, **dadurch gekennzeichnet, dass** Muldenstege zwischen den Aufnahmemulden (20) ausgebildet sind, wobei die Muldenstege mit Nuten zwischen den Enden der Aufnahmemulden (20) ausgebildet sind, so dass zumindest der Anschlagbereich (60) des Anschlags (22, 24, 42, 52) oder der Anschläge (22, 24, 42, 52) für die Enden der stabförmigen Artikel in den Nuten der Muldenstege anordbar oder angeordnet sind.

5. Fördertrommel (100) nach einem der Ansprüche 1 bis 4, **dadurch gekennzeichnet, dass** in einem Förderbereich der Fördertrommel (100) in Umfangsrichtung eine Abdeckung für mehrere Aufnahmemulden (20) vorgesehen ist, wobei der wenigstens eine zwischen den Ende der Aufnahmemulden (20) anordbare oder angeordnete Anschlag (22, 24, 42, 52) im von der Abdeckung abgedeckten Förderbereich der Fördertrommel (100) zwischen den Enden der Aufnahmemulden (20) anordbar oder angeordnet ist.

6. Fördertrommel (100) nach einem der Ansprüche 1 bis 5, **dadurch gekennzeichnet, dass** der Anschlagbereich (60) des Anschlags (22, 24, 42, 52) oder die Anschlagbereiche (60) der Anschläge (22, 24, 42, 52) für die Enden der stabförmigen Artikel seitlich an den Aufnahmemulden (20) anordbar oder angeordnet sind.

7. Fördertrommel (100) nach einem der Ansprüche 1 bis 6, **dadurch gekennzeichnet, dass** die Reibfläche des Anschlagbereichs (60) des Anschlags (22, 24, 42, 52) oder der Anschläge (22, 24, 42, 52) mit einer diskontinuierlichen und/oder unebenen und/oder rauen Oberflächenstruktur ausgebildet ist.

8. Fördertrommel (100) nach einem der Ansprüche 1 bis 7, **dadurch gekennzeichnet, dass** im Bereich des Anschlags (22, 24, 42, 52) oder im Bereich der Anschläge (22, 24, 42, 52), der oder die von dem Anschlagbereich (60) für die Enden abgewandt sind, wenigstens eine oder mehrere mit Unterdruck beaufschlagbare Saugeinrichtungen, insbesondere Saugluftlöcher oder Saugbohrungen, vorgesehen sind.

9. Fördertrommel (100) nach einem der Ansprüche 1 bis 8, **dadurch gekennzeichnet, dass** die Fördertrommel (100) als Schiebetrommel oder als Schiebe-/Schneidtrommel ausgebildet ist.

10. Maschine der Tabak verarbeitenden Industrie, insbesondere Filteransetzmaschine oder Filterherstellmaschine, mit wenigstens einer Fördertrommel (100) nach einem der Ansprüche 1 bis 9.

11. Filterstabsegmentbereitstellungseinrichtung zum Bereitstellen von aus Filterstäben hergestellten Filterstabsegmenten, wobei die Filterstäbe und/oder die Filterstabsegmente an der Filterstabsegmentbereitstellungseinrichtung queraxial gefördert werden oder förderbar sind, mit einer Fördertrommel (100) nach einem der Ansprüche 1 bis 9.

12. Verwendung wenigstens eines Anschlags (22, 24, 42, 52) für stabförmige Artikel für eine oder an einer Fördertrommel (100) nach einem der Ansprüche 1 bis 9.

13. Verfahren zum queraxialen Fördern von stabförmigen Artikeln der Tabak verarbeitenden Industrie, insbesondere Filterstäbe und/oder Filterstabsegmente, unter Verwendung einer Fördertrommel (100) nach einem der Ansprüche 1 bis 9, wobei beim queraxialen Fördern der stabförmigen Artikel in den Aufnahmemulden (20) ein Ende der stabförmigen Artikel mit dem Anschlagbereich (60) des Anschlags (22, 24, 42, 52) oder der Anschläge (22, 24, 42, 52) in Kontakt gebracht wird und durch den Kontakt des Endes der stabförmigen Artikel mit der Reibeinrichtung oder mit der Reibfläche lose Partikel an den Enden der stabförmigen Artikel aus den stabförmigen Artikeln entfernt werden.
